(19)

Europäisches
Patentamt
European
Patent Office
Office européen
des brevets

(11) **EP 4 276 691 A1**

(12) **EUROPEAN PATENT APPLICATION**

(43) Date of publication:
**15.11.2023 Bulletin 2023/46**

(51) International Patent Classification (IPC):
***G06N 3/04*** *(2023.01)*      ***G06N 3/08*** *(2023.01)*

(21) Application number: **22173100.3**

(52) Cooperative Patent Classification (CPC):
**G06N 3/088; G06N 3/045**

(22) Date of filing: **12.05.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **LUBANA, Ekdeep Singh
Ann Arbor (US)**
• **MATHUR, Akhil
London (GB)**
• **KAWSAR, Fahim
Cambridge (GB)**

(74) Representative: **Whiting, Gary
Venner Shipley LLP
5 Stirling House
Stirling Road
The Surrey Research Park
Guildford GU2 7RF (GB)**

(54) **TRAINING METHOD AND APPARATUS**

(57)      An apparatus, method and computer program is described comprising: obtaining local data comprising one or more samples at a user device; computing representations of at least some of said samples by passing said one or more samples through a local feature extractor; clustering the computed representations to generate local centroids; providing generated local centroids and parameters of the local feature extractor to a server; receiving global centroids and global feature extractor parameters from said server; updating the parameters of the local feature extractor based on the received global feature extractor parameters; assigning selected samples of one or more samples and one or more augmentations of said selected samples to global clusters; and further updating the updated parameters of the local feature extractor using machine learning principles, thereby generating a trained local feature extractor.

*Fig. 4*

EP 4 276 691 A1

## Description

### Field

The present specification relates to training of a feature extractor of a device using machine learning principles.

### Background

The training of feature extractor of devices (such as user devices) is known, for example using federated learning principles. There remains a need for further developments in this field.

### Summary

In a first aspect, this specification describes an apparatus (such as a user device or user equipment (UE)) for a self-supervised learning task, comprising means for performing: obtaining local data comprising one or more samples at a user device (e.g. a user device or a system comprising a plurality of user devices); computing representations of at least some of said samples by passing said one or more samples through a local feature extractor, wherein the local feature extractor is implemented by a neural network having trainable parameters; clustering the computed representations, using a clustering algorithm, to generate one or more local centroids; providing at least some of said generated local centroids and at least some of said parameters of the local feature extractor to a server; receiving one or more global centroids from said server, wherein said one or more global centroids are generated (e.g. at the server) by clustering multiple local centroids of one or more user devices; receiving global feature extractor parameters from said server, wherein the global feature extractor parameters are generated (e.g. at the server) by combining multiple local feature extractor parameters of said one or more user devices; updating the parameters of the local feature extractor based on the received global feature extractor parameters; assigning selected samples of one or more samples and one or more augmentations of said selected samples to global clusters; and further updating the updated parameters of the local feature extractor such that a cross-entropy between cluster assignments of the selected samples and the augmentation of said selected samples is minimised, thereby generating a trained local feature extractor. The local data may be unlabelled data (e.g. unlabelled data from one or more devices, such as smart devices).

The means for further updating parameters of the feature extractor may be configured to minimise a loss function, wherein the loss function includes a clustering parameter. The loss function may include a degeneracy parameter incorporating a prediction of an augmentation applied to respective samples.

The means for providing at least some of said generated local centroids and at least some of said parameters of the local feature extractor to the server may be further configured for providing parameters of the trained local feature extractor and local centroids generated by clustering representations of said samples computed by passing said one or more samples through the trained local feature extractor to the server.

The trained local feature extractor used to compute representations of a sample of said local data or an augmentation of the respective sample maybe updated using stochastic gradient descent. The trained local feature extractor used to compute representations of the other of said sample or said augmentation may be generated using an averaging process (e.g. an exponential moving average (EMA)). In this way, a slowly changing model may be generated.

The augmentation may comprise transformations of image data (e.g. geometric, size or colour-based transformations). Alternatively, or in addition, the augmentation may comprise transformations of audio data (e.g. transformations related to one or more of pitch, volume and ambient noise). Examples of augmentations of image data include: a rotation of the respective sample; a cropping of the respective sample; a zooming operation relating to the respective sample; pixel masking of the respective sample; and colour changes relating to the respective sample.

Some example embodiments further comprise means for performing: initialising the parameters of said local feature extractor. The initialisation may be random (or pseudo-random) or to a defined starting point.

The clustering algorithm used to generate one or more local centroids may generate equally sized local clusters.

In a second aspect, this specification describes a server comprising means for performing: receiving trained local parameters of local neural network feature extractors from a plurality of user devices; receiving a set of generated local centroids from the plurality of user devices, wherein the set of the local centroids describe clustering representations of local data (e.g. unlabelled local data) at the respective user devices; generating global feature extractor parameters by combining local feature extractor parameters from some or all of said user devices; generating global centroids by clustering the received set of the generated local centroids using a clustering algorithm; and providing the generated global feature extractor parameters and the generated global centroids to said plurality of user devices, for use in training respective local neural network feature extractors.

The global feature extractor parameters may be an average of the received local parameters.

The local centroids may be generated by clustering representations of said samples computed by passing said one or more samples through the trained local feature extractor to the server. The clustering algorithm used to generate one or more local centroids may generate equally sized local clusters.

Some example embodiments further comprise means for performing: initialising the parameters of said local feature extractor. The initialisation may be random (or pseudo-random) or to a defined starting point.

In the first and second aspects, the said means may comprise: at least one processor; and at least one memory including computer program code, the at least one memory and computer program code configured to, with the at least one processor, cause the performance of the apparatus.

In a third aspect, this specification describes a system comprising: a plurality of user devices, wherein each user device comprises an apparatus as described above with reference to the first aspect; and a server as described above with reference to the second aspect.

In a fourth aspect, this specification describes a method comprising: obtaining local data comprising one or more samples at a user device; computing representations of at least some of said samples by passing said one or more samples through a local feature extractor, wherein the local feature extractor is implemented by a neural network having trainable parameters; clustering the computed representations, using a clustering algorithm, to generate one or more local centroids; providing at least some of said generated local centroids and at least some of said parameters of the local feature extractor to a server; receiving one or more global centroids from said server, wherein said one or more global centroids are generated by clustering multiple local centroids of one or more user devices; receiving global feature extractor parameters from said server, wherein the global feature extractor parameters are generated by combining multiple local feature extractor parameters of said one or more user devices; updating the parameters of the local feature extractor based on the received global feature extractor parameters; assigning selected samples of one or more samples and one or more augmentations of said selected samples to global clusters; and further updating the updated parameters of the local feature extractor such that a cross-entropy between cluster assignments of the selected samples and the augmentation of said selected samples is minimised, thereby generating a trained local feature extractor. The local data may be unlabelled data (e.g. unlabelled data from one or more devices, such as smart devices).

The further updating of the parameters of the feature extractor may comprise minimising a loss function, wherein the loss function includes a clustering parameter. The loss function may include a degeneracy parameter incorporating a prediction of an augmentation applied to respective samples.

Providing at least some of said generated local centroids and at least some of said parameters of the local feature extractor to the server may comprise providing parameters of the trained local feature extractor and local centroids generated by clustering representations of said samples computed by passing said one or more samples through the trained local feature extractor to the server.

The trained local feature extractor used to compute representations of a sample of said local data or an augmentation of the respective sample maybe updated using stochastic gradient descent. The trained local feature extractor used to compute representations of the other of said sample or said augmentation may be generated using an averaging process (e.g. an exponential moving average (EMA)). In this way, a slowly changing model may be generated.

The augmentation may comprise transformations of image data (e.g. geometric, size or colour-based transformations). Alternatively, or in addition, the augmentation may comprise transformations of audio data (e.g. transformations related to one or more of pitch, volume and ambient noise). Examples of augmentations of image data include: a rotation of the respective sample; a cropping of the respective sample; a zooming operation relating to the respective sample; pixel masking of the respective sample; and colour changes relating to the respective sample.

The method may comprise initialising the parameters of said local feature extractor. The initialisation may be random (or pseudo-random) or to a defined starting point.

The clustering algorithm used to generate one or more local centroids may generate equally sized local clusters.

In a fifth aspect, this specification describes a method comprising: receiving trained local parameters of local neural network feature extractors from a plurality of user devices; receiving a set of generated local centroids from the plurality of user devices, wherein the set of the local centroids describe clustering representations of local data (e.g. unlabelled local data) at the respective user devices; generating global feature extractor parameters by combining local feature extractor parameters from some or all of said user devices; generating global centroids by clustering the received set of the generated local centroids using a clustering algorithm; and providing the generated global feature extractor parameters and the generated global centroids to said plurality of user devices, for use in training respective local neural network feature extractors. The said global feature extractor parameters may be an average of the received local parameters.

In a sixth aspect, this specification describes computer-readable instructions which, when executed by a computing apparatus, cause the computing apparatus to perform (at least) any method as described with reference to the fourth or fifth aspects.

In a seventh aspect, this specification describes a computer-readable medium (such as a non-transitory computer-readable medium) comprising program instructions stored thereon for performing (at least) any method as described with reference to the fourth or fifth aspects.

In an eighth aspect, this specification describes an apparatus comprising: at least one processor; and at least one memory including computer program code which, when executed by the at least one processor, causes the apparatus to perform (at least) any method as described with reference to the fourth or fifth aspects.

In a ninth aspect, this specification describes a computer program comprising instructions for causing an apparatus to perform at least the following: obtaining local data comprising one or more samples at a user device; computing representations of at least some of said samples by passing said one or more samples through a local feature extractor, wherein the local feature extractor is implemented by a neural network having trainable parameters; clustering the computed representations, using a clustering algorithm, to generate one or more local centroids; providing at least some of said generated local centroids and at least some of said parameters of the local feature extractor to a server; receiving one or more global centroids from said server, wherein said one or more global centroids are generated by clustering multiple local centroids of one or more user devices; receiving global feature extractor parameters from said server, wherein the global feature extractor parameters are generated by combining multiple local feature extractor parameters of said one or more user devices; updating the parameters of the local feature extractor based on the received global feature extractor parameters; assigning selected samples of one or more samples and one or more augmentations of said selected samples to global clusters; and further updating the updated parameters of the local feature extractor such that a cross-entropy between cluster assignments of the selected samples and the augmentation of said selected samples is minimised, thereby generating a trained local feature extractor.

In a tenth aspect, this specification describes a computer program comprising instructions for causing an apparatus to perform at least the following: receiving trained local parameters of local neural network feature extractors from a plurality of user devices; receiving a set of generated local centroids from the plurality of user devices, wherein the set of the local centroids describe clustering representations of local data (e.g. unlabelled local data) at the respective user devices; generating global feature extractor parameters by combining local feature extractor parameters from some or all of said user devices; generating global centroids by clustering the received set of the generated local centroids using a clustering algorithm; and providing the generated global feature extractor parameters and the generated global centroids to said plurality of user devices, for use in training respective local neural network feature extractors. The said global feature extractor parameters may be an average of the received local parameters.

In an eleventh aspect, this specification describes: a user device for obtaining local data comprising one or more samples at a user device; a control module (e.g. of a user device) for computing representations of at least some of said samples by passing said one or more samples through a local feature extractor, wherein the local feature extractor is implemented by a neural network having trainable parameters; a clustering module (or some other means) for clustering the computed representations, using a clustering algorithm, to generate one or more local centroids; an output (or some other means) for providing at least some of said generated local centroids and at least some of said parameters of the local feature extractor to a server; a first input (or some other means) for receiving one or more global centroids from said server, wherein said one or more global centroids are generated by clustering multiple local centroids of one or more user devices; a second input (or some other means) for receiving global feature extractor parameters from said server, wherein the global feature extractor parameters are generated by combining multiple local feature extractor parameters of said one or more user devices; a first processor (or some other means) for updating the parameters of the local feature extractor based on the received global feature extractor parameters; a second processor (or some other means) for assigning selected samples of one or more samples and one or more augmentations of said selected samples to global clusters; and a training module (or some other means) for further updating the updated parameters of the local feature extractor such that a cross-entropy between cluster assignments of the selected samples and the augmentation of said selected samples is minimised, thereby generating a trained local feature extractor.

In a twelfth aspect, this specification describes: a first input (or some other means) for receiving trained local parameters of local neural network feature extractors from a plurality of user devices; a second input (or some other means) for receiving a set of generated local centroids from the plurality of user devices, wherein the set of the local centroids describe clustering representations of local data (e.g. unlabelled local data) at the respective user devices; a first processor (or some other means) for generating global feature extractor parameters by combining local feature extractor parameters from some or all of said user devices; a second processor (or some other means) for generating global centroids by clustering the received set of the generated local centroids using a clustering algorithm; and an output (or some other means) for providing the generated global feature extractor parameters and the generated global centroids to said plurality of user devices, for use in training respective local neural network feature extractors. The said global feature extractor parameters may be an average of the received local parameters.

## Brief description of the drawings

Example embodiments will now be described, by way of example only, with reference to the following schematic drawings, in which:

FIG. 1 is a block diagram of a user device used in example embodiments;
FIG. 2 is a block diagram of a system in accordance with an example embodiment;
FIG. 3 is a flow chart showing an algorithm in accordance with an example embodiment;
FIG. 4 is a block diagram of a system in accordance with an example embodiment;
FIG. 5 is a flow chart showing an algorithm in accordance with an example embodiment;
FIG. 6 is a block diagram of a system in accordance with an example embodiment;
FIG. 7 is a flow chart showing an algorithm in accordance with an example embodiment;
FIG. 8 is a flow chart showing an algorithm in accordance with an example embodiment;
FIGS. 9 to 12 are plots showing performance metrics of example algorithms;
FIG. 13 is a block diagram of components of a system in accordance with an example embodiment; and
FIG. 14 shows an example of tangible media for storing computer-readable code which when run by a computer may perform methods according to example embodiments described above.

**Detailed description**

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

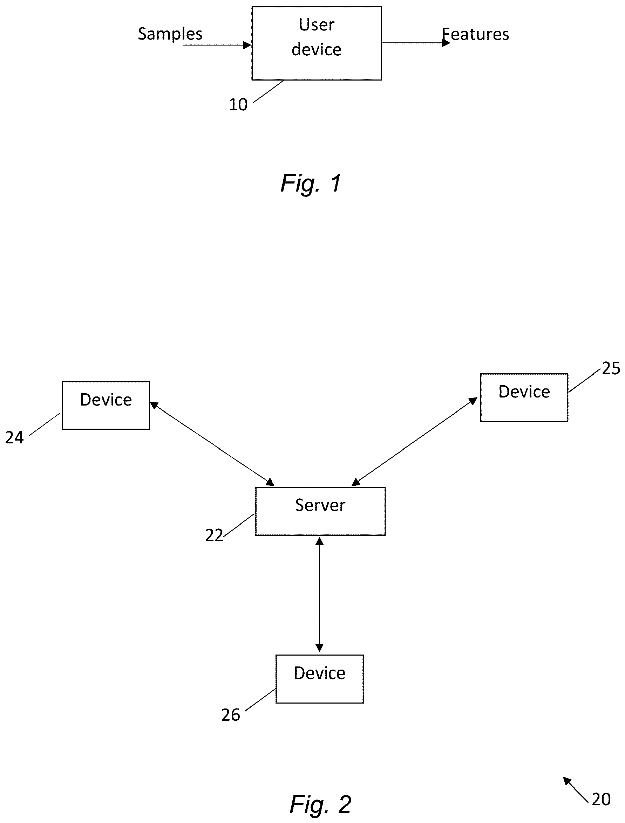

FIG. 1 is a block diagram of a user device 10 used in example embodiments. The user device 10 implements a feature extractor that receives samples of data and provides an output that seeks to provide information regarding the samples (referred to herein a "features"). The feature extractor may be trained using machine learning principles and may be implemented using a neural network, for example, a deep neural network (DNN), such as a convolutional neural network (CNN).

The feature extractor of the user device 10 may be used, for example, to process image data in order to obtain representative information (features) regarding related images. Example feature extractors functions include optical character recognition, such as the ability to recognise letters or numbers in written form, or the ability to distinguish between animals (e.g. to distinguish between images of a cat and images of a dog).

The ability of train the feature extractor of the user device 10 is partly dependent on the nature of the data used to train the feature extractor. For example, if the training data includes more images of cats than dogs, then, after training, the feature extractor is likely to be better at identifying cats than dogs.

Federated Learning is a technique that can be used to train an algorithm across multiple devices, such as multiple instances of the user device 10. This approach potentially enables more data to be obtained for use in training and may also enable a wider variety of data inputs to be used.

FIG. 2 is a block diagram of a system, indicated generally by the reference numeral 20, in accordance with an example embodiment. The system 20 comprises a server 22 and multiple devices, such as first to third devices 24 to 26. The devices 24 to 26 implement a feature extractor and may, for example, be instances of the user device 10 described above. For example, the devices 24 to 26 may have or be connected to a respective image sensor, such as a camera, and be used to process received/captured image data and/or images, i.e. input data, as discussed above. The input data received at the devices 24 to 26 may be used by the server 22 to train a feature extractor, such as a common feature extractor, that can be used by all of the devices 24 to 26, based on a large, and potentially varied, data set.

An example use of the devices 24 to 26 is to process the input data captured by smart devices. Such smart devices are becoming ubiquitous and can be used capture sensor data in large quantities. Exploiting this quantity of data in a privacy-preserving manner is not trivial. For example, using the server 22 to train a feature extractor based on data captured at the devices 24 to 26 may not be acceptable from a privacy viewpoint if the captured data needs to be shared with the server.

As discussed in detail below, the devices 24 to 26 may include a feature extractor model that can be trained locally using local data, such as sensor data. The models can then be aggregated a common feature extractor model at the server 22 before being deployed at the devices 24 to 26. Such a federated learning approach may enable the harvesting and processing of vast amounts of intelligence (in a privacy-preserving manner) that is distributed across multiple node devices, even millions of node devices, (such as the devices 24 to 26). As such, this could provide an enabler for wireless telecommunication applications/services, such as mobile distributed computing or mobile edge computing (MEC), as well as decentralized solutions such as cryptocurrencies and decentralized network infrastructure.

If samples received at devices 24 to 26 comprise labelled data, then supervised machine learning principles can be used to train the parameters of one or more feature extractors for use by the user devices 24 to 26 (and the user device 10). However, requiring that training data is labelled restricts the practicality of federated learning, as labelled data is often unavailable at node devices such as the devices 24 to 26. For example, when one captures the image of a tree using a camera, the camera does not generally store a label claiming the image to be that of a tree.

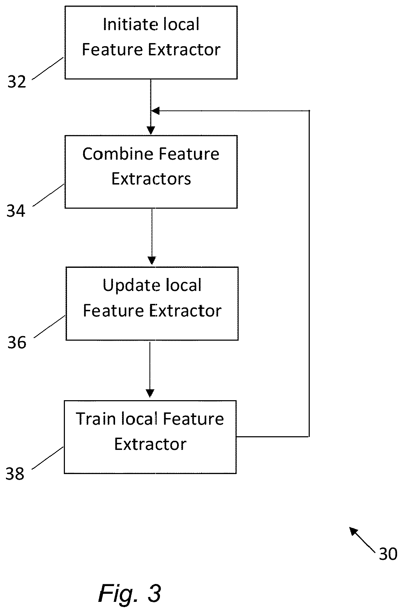

FIG. 3 is a flow chart showing an algorithm, indicated generally by the reference numeral 30, in accordance with an example embodiment. The algorithm 30 may be implemented using the system 20.

The algorithm 30 starts at operation 32, where local feature extractors are initiated. For example, parameters of feature extractors at the devices 24 to 26 may be initialised randomly (or pseudo-randomly) or initialised to a pre-defined setting.

At operation 34, the parameters of the local feature extractors are combined. In the example system 20, the devices 24 to 26 may provide the parameters of the local feature extractors at the respective devices to the server 22, where those parameters are combined (e.g. the parameters could be averaged across all the local feature extractors) to create a combined or common feature extractor.

At operation 36, the local feature parameters are updated or replaced based on the combined feature extractor generated in the operation 34. For example, the parameters of the combined feature extractor may be sent from the server 22 to the devices 24 to 26 and then implemented as local feature extractors at those devices.

At operation 38, local feature extractors are trained locally (based on local data, e.g. unlabelled data). The algorithm then returns to operation 34, where the parameters of the local feature extractors, as trained in the operation 38, are combined (in a further instance of the operation 34), and the combined feature extractor provided to the local devices (in a further instance of the operation 36).

The operations 34 to 38 are repeated until the algorithm terminates. Many termination conditions are possible; these may include a defined performance level being reached, the parameters being stable over multiple training instances, a predetermined number of training cycles being completed, convergence of the trained combined model, or on some other termination condition. Once the combined feature extractor is trained (i.e. the algorithm terminates), it can be used for inferencing new data in any of the corresponding devices 24 to 26.

In the algorithm 30, much of the data processing is implemented at the local devices (e.g. the devices 24 to 26 in the example system 20). In particular, raw data from a node device is processed locally (and is not, for example, shared with the server 22).

The algorithm 30 is robust to the presence of statistical heterogeneity across node/client datasets (which is a feature of many Federated Learning applications). In particular, the combined feature extractor generated in the operation 34 (and then provided to the local nodes for use in the next training iteration) is influenced by data from different datasets such that, over time, the robustness of the feature extraction to different data types tends to increase. For example, in the event of an imaging processing algorithm, if the device 24 largely processes images of more cats than dogs, the device 25 processes more images of dogs than cats, and the device 26 does not process images of any dogs or cats, then the generation of a feature extractor based on all of these data sets should provide a feature extractor that is better able to identify images of dogs and images of cats than any of the individual feature extractors would if they were trained only on local data.

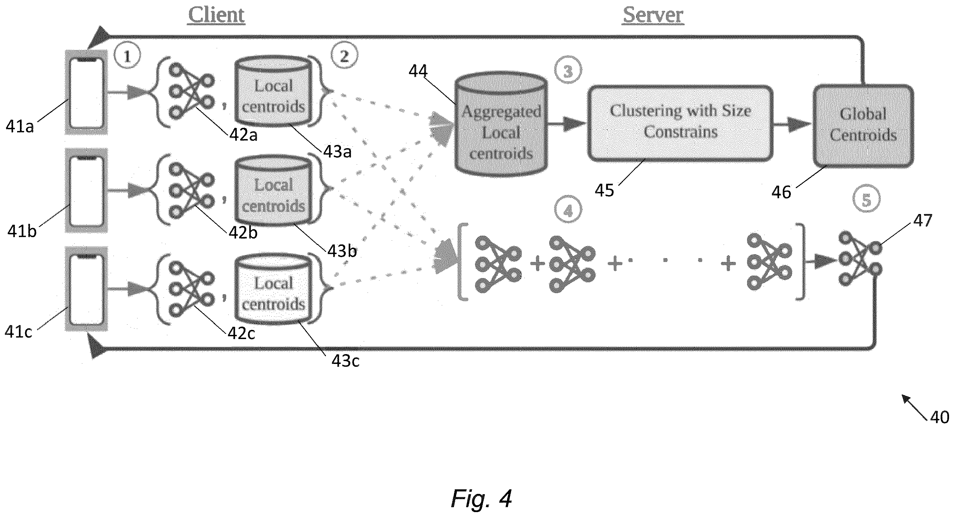

FIG. 4 is a block diagram of a system, indicated generally by the reference numeral 40, in accordance with an example embodiment.

The system 40 includes a client/user equipment (UE)/node side and a server side and is an example implementation of the system 20. The client side includes a first user device 41a, a second user device 41b and a third user device 41c that are example implementations of the devices 24 to 26 of the system 20.

The user devices 41a to 41c comprise local features extractors 42a to 42c respectively. In the example system 40, the feature extractors 42a to 42c are implemented using neural networks, for example, a deep neural networks (DNN), such as a convolutional neural networks (CNN), having trainable parameters.

The user devices 41a to 41c receive local data (e.g. unlabelled data), such as sensor data, and compute representations or features by passing the data through the feature extractor of the neural network of the respective user device (i.e. the feature extractors 42a to 42c respectively). The generated features are clustered (at the respective user devices) using a local clustering algorithm (e.g. Sinkhorn-Knopp, or K anonymous clustering) to generate local centroids 43a to 43c respectively. Thus, local client data is converted into representations and a clustering algorithm run to partition them.

The user devices 41a to 41c share local centroids 43a to 43c with the server. The shared local centroids are aggregated to generate aggregated local centroids 44. Another clustering algorithm 45 is run on the aggregated local centroids 44 to generate a set of global centroids 46. It should be noted that the sharing of local centroids (rather than raw data) is privacy preserving (for example due to K anonymity).

The clustering operations can be implemented in many different ways. For example, the local clustering may be implemented using K anonymous clustering methods that require equally-sized clusters or using differentially private clustering methods.

In addition to the local centroids 43a to 43c, the user devices 41a to 41c also share the parameters of the respective trained feature extractor 43a to 43c with the server. The shared parameters are combined/merged (e.g. averaged using federated averaging algorithms) to generate parameters of a combined feature extractor 47.

As discussed in detail below, the computed global centroids 46 and the combined feature extractor 47 are sent to the user devices 41a to 41c. Thereafter, the user devices seek to solve a self-supervised learning task (e.g. to enforce that an unlabelled sample and its augmentation are assigned to the same cluster). This enforcement seeks to ensure that the respective (local) feature extractor learns good representations of the unlabelled data that are robust against data transformations as well as characterising the global knowledge contained in the entire federated learning system.

As discussed further below, the local devices use the global centroids to minimize the cross-entropy between the cluster assignments of a sample and its augmentations. Thus, the same set of global centroids is used across the devices 41a to 41c.

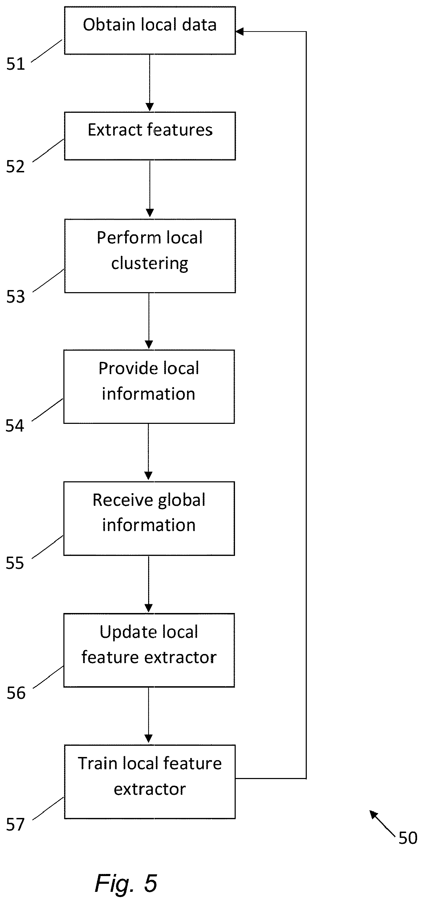

FIG. 5 is a flow chart showing an algorithm, indicated generally by the reference numeral 50, in accordance with an example embodiment. The algorithm 50 may be implemented at the user/node devices 41a to 41c of the system 40 described above.

The algorithm 50 starts at operation 51, where local data comprising one or more samples of data is obtained at the respective user device (e.g. one of the user devices 41a to 41c), e.g. from a sensor device implemented in or connected to the respective user device. The local data is typically unlabelled data.

At operation 52, representations (e.g. features) of at least some of said samples are extracted by passing said one or more samples (e.g. a data batch) through a local feature extractor (such as the respective feature extractor 42a to 42c). As described above, each local feature extractor may be implemented by a neural network, for example, a deep neural network (DNN), such as a convolutional neural network (CNN), having trainable parameters.

At operation 53, the representations computed in the operation 52 are clustered, using a clustering algorithm, e.g., Sinkhorn-Knopp or K anonymous clustering, to generate one or more local centroids.

At operation 54, local information is provided by the respective user device to a server (such as the server shown in the system 40). The local information may include the local centroids generated in the operation 53 and at least some or all of the parameters of the local feature extractor used in the operation 52. Thus, as discussed above, each client device can share its local centroids with the server so that global centroids can be generated. Similarly, each client device can share parameters of the local feature extractor with the server so that a global/combined feature extractor can be defined.

At operation 55, global information is received at the user devices 41a to 41c from the server. The global information may include global centroids (generated by clustering local centroids provided by multiple user devices to the server) and global feature extractor parameters (generated by combining local feature extractor parameters provided by multiple user devices to the server).

At operation 56, the parameters of the local feature extractor are updated based on or replaced with the global feature extractor parameters received in the operation 55.

At operation 57, the local feature extractor (which has been updated based on, or replaced with, the global feature extractor) is trained based on new local data (e.g. a new data batch). As discussed in detail below, the operation 57 may be implemented by computing assignments to the global clusters for selected local data samples and one or more augmentations of said local data samples and updating parameters of the feature extractor such that a cross-entropy between cluster assignments of the selected samples and the augmentation of said selected samples is minimised.

The algorithm 50 then returns to operation 51. In the next iteration of the operation 52, one or more new samples of local data are passed through the local feature extractor (as updated and trained in the previous iterations of the operations 56 and 57) to extract features that are then clustered and provided to the server, together with the parameters of the updated and trained feature extractor.

The operations 51 to 57 are repeated until convergence. Once the global feature extractor parameters are trained (i.e. the algorithm converges) after the operation 54, it can be used for inferencing new data in any of the corresponding devices, such as 24 to 26 or 41.

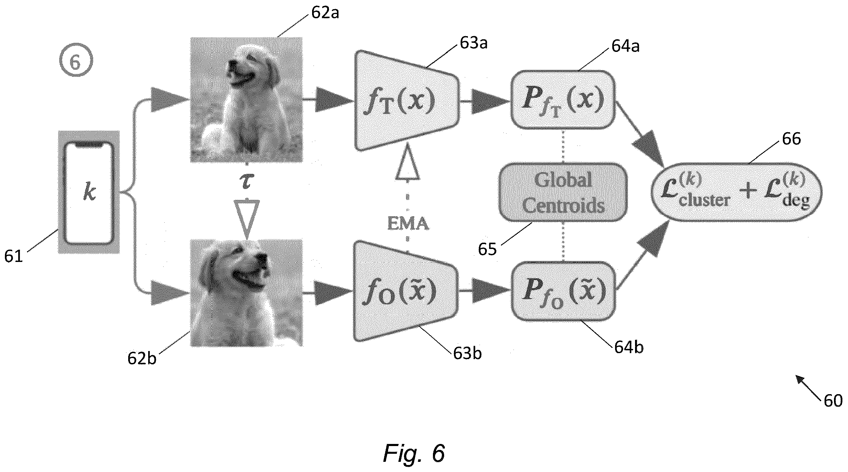

FIG. 6 is a block diagram of a system, indicated generally by the reference numeral 60, in accordance with an example embodiment.

The system 60 comprises a user device 61 (which may be one of the user devices 41a to 41c of the system 40 described above). The user device 61 includes a feature extractor, which may have been updated/replaced in an instance of the operation 56 described above. The system 60 may be used to implement the operation 57 in which the feature extractor is trained.

The feature extractor of the user device 61 is trained based on local data sample and augmentation(s) of that local data sample. In the example system 60, the local data sample is an image 62a of a dog and the augmentation of the local data sample is an image 62b of the dog that has been rotated. As discussed in detail below, the feature extractor is trained such that the image 62a and its augmentation 62b are assigned to the same cluster of the global clusters (e.g. as received in the operation 55 of the algorithm 50).

The rotation of the sample 62a to generate the augmentation sample 62b is one example augmentation. Many other augmentations are possible, such as cropping of a sample; a zooming operation relating to a sample; pixel masking of said sample; and colour changes relating to said sample, or any combination thereof. Other augmentations are possible, for example in the event that the data sample is not an image.

The sample 62a is processed using a function 63a and a probability module 64a, based on global centroids 65 (which global centroids may be received in the operation 55 described above). Similarly, the sample 62b is processed using a function 63b and a probability module 64b, based on the global centroids 65. The probability modules 64a and 64b generate a loss function 66, as described further below. The local feature extractor is trained to minimise the loss function.

The loss function 66 includes a clustering parameter $(\mathcal{L}_{cluster}^{(k)})$. In the example system 60, the loss function 66 also includes a degeneracy parameter $(\mathcal{L}_{deg}^{(k)})$ incorporating a prediction of the augmentation applied to the respective sample. The loss function 66 may be updated using stochastic gradient descent.

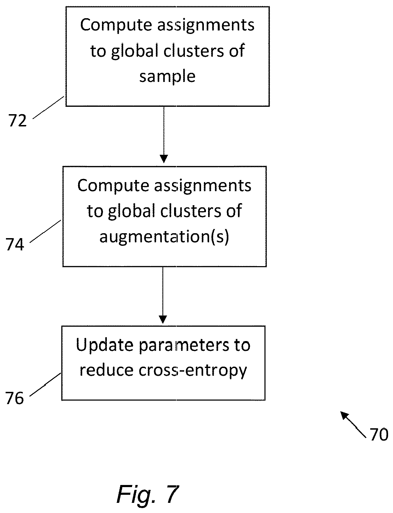

FIG. 7 is a flow chart showing an algorithm, indicated generally by the reference numeral 70, in accordance with an example embodiment. The algorithm 70 is an example implementation of the operation 57 of the algorithm 50 described above and may be implemented by the system 60.

The algorithm 70 starts at operation 72, where one or more selected samples are each assigned to one of the global clusters. Similarly, at operation 74, augmentations of selected samples are computed and assigned to one of the global clusters.

At operation 76, parameters of the relevant feature extractor are updated such that a cross-entropy between cluster assignments of the selected samples (as generated in the operation 72) and augmentations of selected samples (as generated in the operation 76) is minimised, thereby generating a trained local feature extractor.

During local training (e.g. using the algorithm 70), the divergence between assignments of a sample and its augmentations to global clusters are minimised (by minimising a loss function, as discussed above). Early in the training process, the cluster centroids correspond to random features and therefore cannot yet yield a sufficiently discriminative signal for training; this can result in so-called degenerate solutions. A degeneracy regularizer maybe provided in the form of a predictive self-supervised learning (SSL) task that prevents the model from outputting a constant representation. A denoising autoencoders could be used for this purpose, but other predictive SSL tasks can also be used, such as rotation prediction, colorization, jigsaw, or context prediction. In the example algorithm described above, rotation prediction is used as this is well suited to the federated approach described herein since rotation adds only an extra forward/backward pass and small memory cost.

In one example embodiment, the degeneracy parameter described above is generated by rotating each sample in a batch by a random angle chosen from a defined set (e.g. {o, 90, 180, 270}) and making a prediction of that rotation angle:

$$\mathcal{L}_{deg}^{(k)} = \mathbb{E}_{x \in X^k, i \in \mathcal{U}_4}\left[\arg\max\left(W_{r,i}^T f(\mathcal{R}(x, \alpha_i))\right) = i\right]$$

Where:

- $\mathcal{L}_{deg}^{(k)}$ is a loss to prevent degenerate solutions on the k$^{th}$ client.

- $X^{(k)}$ is data on a k$^{th}$ client.

- $x \in X$ is a randomly selected datapoint from dataset X.

- $\mathbb{E}_{x \in X}[g(x)]$ is an expectation of function g(.) over randomly selected samples from data X.

- $\mathcal{U}_4$ is Uniform distribution over integers [0, 1, 2, 3].

- $i$ is a randomly selected integer from $\mathcal{U}_4$

- $\alpha$ refers to the predefined set of rotation angle [e.g. 0, 90, 180, 270]

- $\alpha_i$ is the i$^{th}$ rotation angle selected from the set $\alpha$ above (e.g. $\alpha_1$ equals 90)

- $\mathcal{R}$ (x, $\alpha_i$) is a rotation operator that rotates the input image *x* by angle $\alpha_i$.

- *f(x)* is the function of a feature extractor (e.g. a neural network) that outputs a feature vector of dimensions *D* corresponding to input *x*.

- $W_r$ is a matrix (or linear layer, in neural network terms) of dimensions $D \times 4$

- $W_{r,i}$ is the ith row of the matrix $W_r$.

In another example embodiment, the degeneracy parameter can be generated by any other augmentation method/type of each sample in a batch by choosing from a defined set of augmentation degrees/magnitudes/parameters and making a prediction of that augmentation, wherein

- *a* refers to the predefined set of augmentation degrees/magnitudes/parameters
- $a_i$ is the ith degree/magnitude/parameter selected from the set $\alpha$ above
- *A* (x, $a_i$) is an augmentation operator that augments the sample x by the degree/magnitude/parameter.

After training for a few iterations of the processes 50 and 70, the feature extractor model representations change; possibly changing a cluster assignment of a particular sample. This pushes the model to learn varying assignments for the same sample over time, forcing it to predict uniform assignments for all samples. One approach to address this problem is to calculate assignments alongside clusters and keep them fixed until the next clustering operation, which may happen every few iterations. In one example embodiment, we provide two models: an online model (see the function 63b) that is trained using gradient descent and another model (see the function 63a) whose parameters are an average (e.g an exponential moving average (EMA)) of the online model:

$$Tt = m\ Tt\text{-}1 + (1 - m)\ O,$$

where m is a scalar close to 1, T denotes parameters of EMA model, and O denotes parameters of the online model. In this way, the parameters of the averaged model evolve slowly over time and hence its assignments remain consistent with the original ones. This yields the following loss function for promoting clusterability of representations:

$$\mathcal{L}_{cluster}^{(k)} = \mathbb{E}_{x \in X^k, \tilde{x} \sim \mathcal{T}(x)} \left[ \mathcal{H}\left( P_{f_T}(x), P_{f_o(x)} \right) \right]$$

Where:

- $\mathcal{L}_{cluster}^{(k)}$ is a local training loss that promotes clusterability of model representations at the kth client.
- $X^{(k)}$ is data on a kth client.
- $x \in X$ is a randomly selected datapoint from dataset X.
- $\mathcal{T}$ (x) is a set of all possible augmentations of datapoint x.
- $\tilde{x}$- $\mathcal{T} \sim \mathcal{T}$ (x) is a randomly selected version of input x, selected from its set of possible augmentations $\mathcal{T}$ (x).
- $\mathbb{E}_{x \in X}[g(x)]$ is an expectation of function g(.) over randomly selected samples from data X.
- $f_o$ (x) is an online feature extractor (e.g. a neural network) that outputs a feature vector corresponding to input x; the feature extractor is referred to as being "online" because it is updated via gradient descent.
- $f_T$(x) is a target feature extractor (e.g. a neural network) that outputs a feature vector corresponding to input x; the feature extractor is referred to as being "target" because it is updated via an exponential moving average of the online model.
- $\mathcal{H}$ (a, b) is the cross-entropy between two distributions (*a* and *b*).
- $P_f$(x) is a probability vector whose nth elements denotes the probability that representation *f(x)* should be assigned to global cluster *n*.

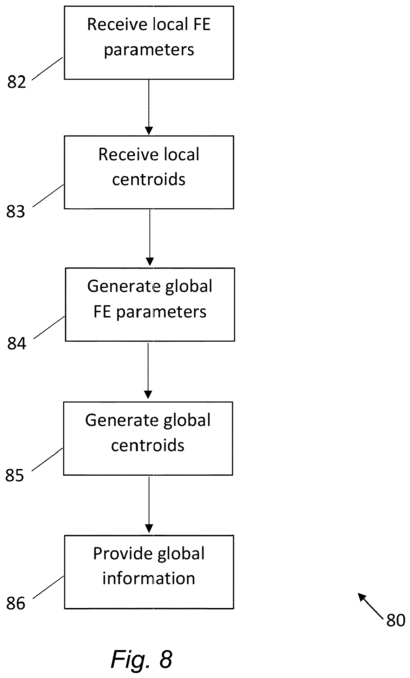

FIG. 8 is a flow chart showing an algorithm, indicated generally by the reference numeral 80, in accordance with an example embodiment. The algorithm 80 is implemented as a server (such as the server 22 of the system 20 or the server of the system 40).

The algorithm 80 starts at operation 82, where local parameters for local feature extractors (see, for example, the operation 54 described above) are received from a plurality of user devices of a system (such as the user devices 41a, 41b and 41c of the system 40).

At operation 83, a set of local centroids generated at the plurality of user devices is received. As discussed above in the operation 53 of the algorithm 50 described above, the local centroids may be generated by clustering representations of unlabelled local data at the respective user devices generated by the respective local feature extractors.

At operation 84, global feature extractor parameters are generated by combining local feature extractor parameters from some or all of said user devices of the plurality, as discussed above with reference to the operation 55. For example, the global feature extractor parameters may be an average of the received local parameters.

At operation 85, global centroids are generated by clustering the received set of the local centroids using a clustering algorithm, as discussed above with reference to the operation 55.

Finally, at operation 86, global information (comprising the generated global feature extractor parameters and the generated global centroids) are provided the plurality of user devices, for use in training the respective local feature extractors.

As described above, in some example embodiments, local data obtained, for example, in the operation 51 may be generated by multiple user devices or IoT (internet-of-things) devices, such smart devices, smart phones, mobile communication devices, sensor devices, or any combination thereof. There are billions of such devices in the world, with user generated data, data sets or content stored on them, such as video and images. At least a part of this data could potentially be used for generating machine intelligence, however this is hindered by the fact that most of this data is unlabelled. We cannot expect users to provide labels for all the data they have created and/or collected, e.g. images they take. Another embodiment could be traffic or CCTV (closed-circuit television) cameras installed in public places, which are continuously capturing unlabelled objects in captured images/videos. Additionally or alternatively, the multiple smart devices may generate and/or provide system data or functional data of their functioning, such as memory usage patterns, battery usage patterns, CPU (central processing unit)/GPU (graphics processing unit) usage patterns, or any combinations thereof. Additionally or alternatively, the multiple sensor or IoT devices may generate and/or provide motion data, heart rate data, heart health data, temperature data, moisture data, etc. or any combination thereof.

The current paradigm for learning from unlabelled data is to upload it to a central server and execute an unsupervised learning algorithm to learn about the structure and key features in the data. However, this is not privacy preserving and users/devices end up sharing potentially private information with a central server.

In example embodiments described herein, we propose algorithms that enable many (e.g. millions) of user devices to collaboratively generate intelligence from unlabelled data, without compromising data privacy.

The user/sensor devices described herein may take many forms, such as camera-enabled smart devices (phone, watch, glass etc.), audio-sensing devices, and other sensing devices (e.g. fitness trackers).

During training, the input data could take many difference forms. For images, example data types include 3-dimensional RGB images. For audio, data types include raw 1-D audio segments or a 2-D spectrogram representation of the audio.

Once the global feature extractor is trained, in an inferencing phase, any raw data (such as an image) could be passed through the trained feature extractor to obtain high quality features. For example, if an input is a $500 \times 500$ image of a dog, there are 250000 input features (all pixels) in the raw data. By passing it through the feature extractor, that is trained by the principles described herein by the various examples, we can learn which of the features are important, e.g., the feature extractor may output the regions (pixels) around a dog's nose, ears, eyes, while ignoring the pixels corresponding to the background. Thus, a trained feature extractor may take as input a raw data sample (e.g., 500 x 500 pixel image) and output a set of features (e.g. 128 features, such as the dog's nose, ears, eyes, etc.).

Features extracted using a trained feature extractor in accordance with example embodiments described herein may be used for many purposes, such as training downstream learning tasks, e.g., animal classification. Since the feature extractor reduces the dimensionality of the data, e.g. down to a small number of high-quality features, it maybe possible to train a supervised learning classification model on top of these features using a relatively small amount of labelled data.

In some example embodiments, the local clustering process includes clustering into equally sized local clusters. This is not a requirement of all example embodiments. This can be advantageous to present single-sample clusters, in which case the single sample becomes the local centroid and privacy leakage can happen when the local centroid is shared with the server.

In some example embodiments, generating the global feature extractor parameters further comprises means for calculating loss of the generated global feature extractor and repeating the steps until the generated global feature extractor convergence.

In the algorithms described herein, much of the processing happens on the client/UE/node device (e.g. local clustering, feature extraction, self-supervised NN training). Cluster centroids between the client and server are shared - sharing of local centroids is by definition privacy preserving due to K-anonymity. Other algorithms such as differential privacy can be incorporated for better privacy guarantees. The principles described herein can be implemented with small batch sizes (e.g. as small as, or even smaller than, 8), which means the training can happen on resource-constrained node devices with limited runtime memory. It should be noted that the present invention works well with small batch sizes (such as 8) but is not limited to small batch sizes. If the client/user devices have sufficiency memory, then larger batch sizes may be appropriate (and may accelerated training).

In federated learning, attributes include sensitivity to heterogeneity across client data, scalability with clients, robustness to participation ratio (because clients can sporadically drop out of the federated network), and robustness to local epochs (high robustness implies better training efficiency). Indeed, on all these properties, implementations of the principles described herein have been found to have good performance, as described further below.

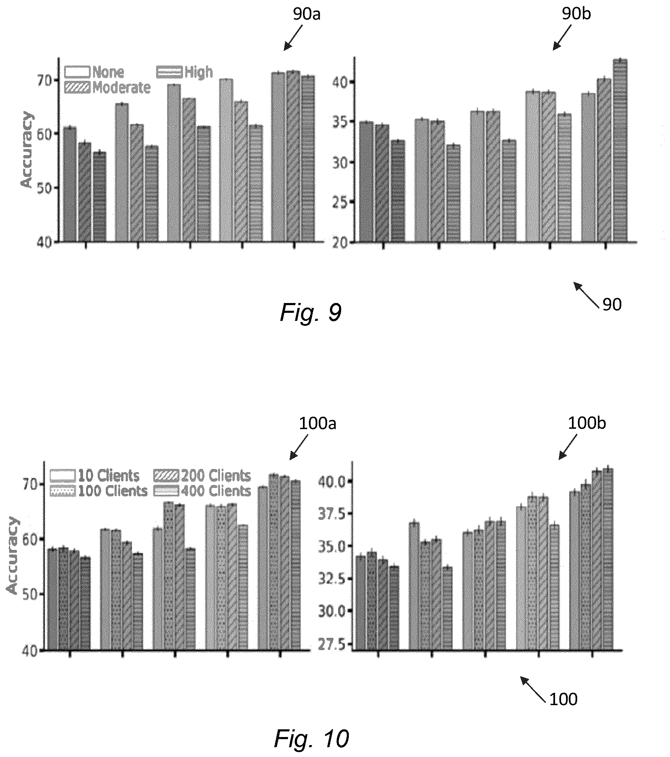

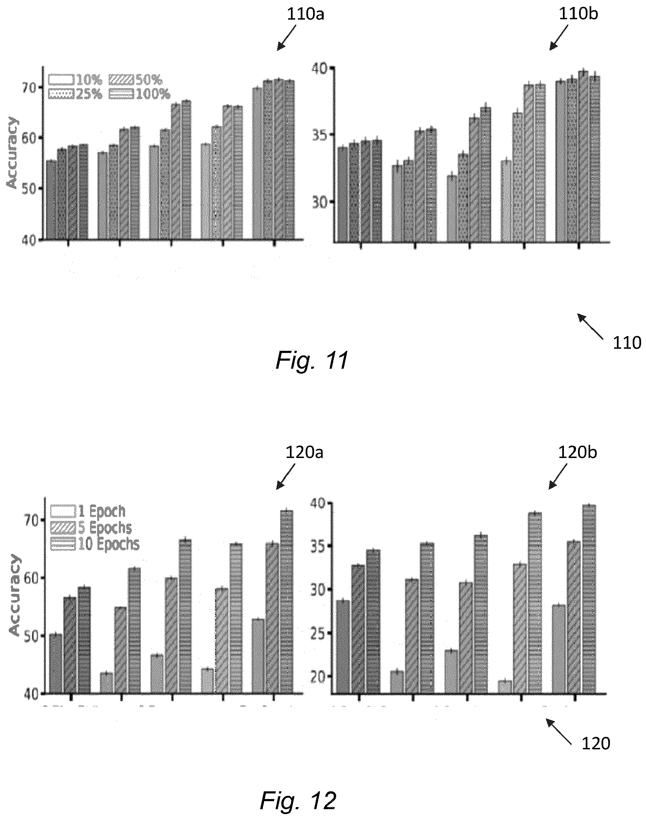

By way of example, FIGS. 9 to 12 are plots, indicated generally by the reference numerals 90 to 120 respectively, showing performance metrics of example algorithms. Each of the plots shows the performance of different federated training algorithms in the following order: f-SimCLR (on the far left), f-SimSiam, f-SpecLoss, f-BYOL, and an implementation of the principles described herein (on the far right). In each data set, evaluations were conducted twice, once with training based on a CIFAR-10 dataset (see the plots 90a, 100a, 110a and 120a) and once with training based on a CIFAR-100 dataset (see the plots 90b, 100b, 110b and 120b).

The plots 90 show sensitivity to heterogeneity across client data. Each of the prior art arrangements lose performance with increased heterogeneity, whereas the implementation of the principles described herein has either relatively flat performance (see the plot 90a) or increased performance (see the plot 90b) with increased heterogeneity.

The plots 100 show scalability with the number of clients. The implementation of the principles described herein outperforms other methods and is generally robust to number of clients in the federation.

The plots 110 show robustness to participation ratio (because clients can sporadically drop out of the federated network). Whilst the accuracy of each of the prior art arrangements decreases at smaller participation ratios, the performance of the implementation of the principles described herein is relatively flat.

The plots 120 show robustness to local epochs (where higher robustness implies better training efficiency).

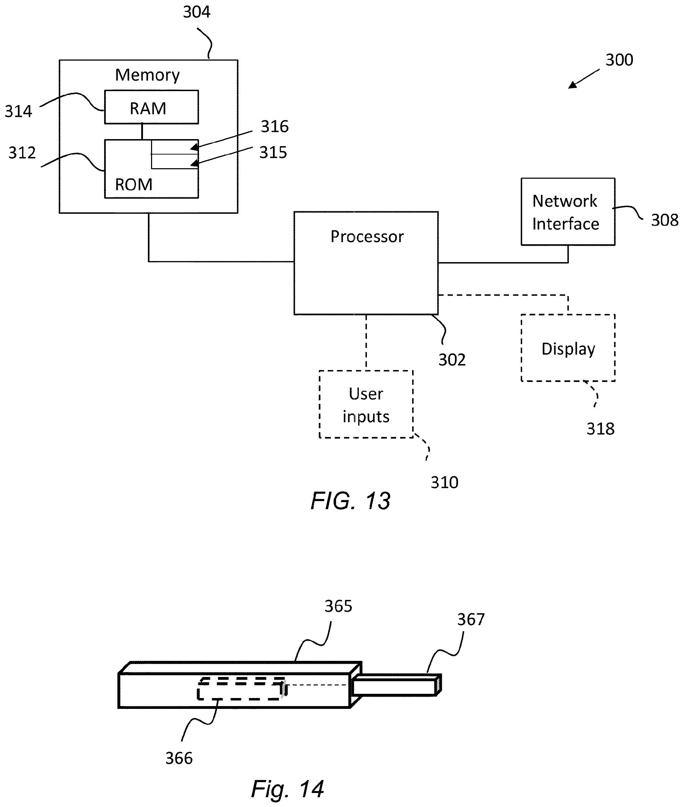

For completeness, FIG. 13 is a schematic diagram of means, such as components of one or more of the example embodiments described previously, which hereafter are referred to generically as a processing system 300. The processing system 300 may, for example, be (or may include) the user device 10 or 20, and/or the apparatus referred to in the claims below.

The processing system 300 may have at least one processor 302, at least one memory 304 coupled to the at least one processor and comprised of at least one random access memory (RAM) 314 and at least one read only memory (ROM) 312, and, optionally, a user input 310 and a display 318. The processing system 300 may also comprise or be connected to one or more sensors, which provide data, such as one or more data samples to a neural network. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The at least one processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 30, 50, 70 and 80 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, a plurality of processors, a circuitry, or a plurality of circuitries.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The processing system 300 may be in a smart phone, a mobile communication device, a smart watch, an augmented reality (AR) / extended reality (XR) classes or goggles, a smart television device, a smart earbuds, a smart camera, a smart metering device, a standalone computer, a server, a console, a vehicle, or any combination thereof, or a network thereof. The processing system 300 and related structural parts may be all inside device/apparatus such as an IoT device/apparatus i.e. embedded to very small size.

In some example embodiments, the processing system 300 may also be associated with external software applications. These maybe applications stored on a remote server device/apparatus and may run partly or exclusively on the remote server device/apparatus. These applications maybe termed cloud-hosted applications. The processing system 300 maybe in communication with the remote server device/apparatus in order to utilize the software application stored there.

FIG. 14 shows tangible media device, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in various means, for example, software, hardware, application logic or any combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein maybe performed in a different order and/or concurrently with each other. Furthermore, if desired, one or more of the above-described functions may be optional or may be combined. Similarly, it will also be appreciated that the flow diagrams of FIGS. 3, 5, 7 and 8 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1.  An apparatus for a self-supervised learning task, comprising means for performing:

    obtaining local data comprising one or more samples at a user device;
    computing representations of at least some of said samples by passing said one or more samples through a local feature extractor, wherein the local feature extractor is implemented by a neural network having trainable parameters;
    clustering the computed representations, using a clustering algorithm, to generate one or more local centroids;
    providing at least some of said generated local centroids and at least some of said parameters of the local feature extractor to a server;
    receiving one or more global centroids from said server, wherein said one or more global centroids are generated by clustering multiple local centroids of one or more user devices;
    receiving global feature extractor parameters from said server, wherein the global feature extractor parameters are generated by combining multiple local feature extractor parameters of said one or more user devices;
    updating the parameters of the local feature extractor based on the received global feature extractor parameters;
    assigning selected samples of one or more samples and one or more augmentations of said selected samples to global clusters; and
    further updating the updated parameters of the local feature extractor such that a cross-entropy between cluster assignments of the selected samples and the augmentation of said selected samples is minimised, thereby generating a trained local feature extractor.

2.  An apparatus as claimed in claim 1, wherein the means for further updating parameters of the feature extractor is configured to minimise a loss function, wherein the loss function includes a clustering parameter.

3.  An apparatus as claimed in claim 2, wherein the loss function includes a degeneracy parameter incorporating a prediction of an augmentation applied to respective samples.

4.  An apparatus as claimed in any one of claims 1 to 3, wherein the means for providing at least some of said generated local centroids and at least some of said parameters of the local feature extractor to the server is further configured for providing parameters of the trained local feature extractor and local centroids generated by clustering representations of said samples computed by passing said one or more samples through the trained local feature extractor to the server.

5.  An apparatus as claimed in any one of the preceding claims, wherein the trained local feature extractor used to compute representations of a sample of said local data or an augmentation of the respective sample is updated using stochastic gradient descent.

6.  An apparatus as claimed in claim 5, wherein the trained local feature extractor used to compute representations of the other of said sample or said augmentation is generated using an averaging process.

7.  An apparatus as claimed in any one of the preceding, wherein the augmentation comprises one or more of:

    transformations of image data; and
    transformations of audio data.

8.  An apparatus as claimed in any one of the preceding claims, wherein said local data comprises unlabelled data from one or more devices.

9.  An apparatus as claimed in any one of the preceding claims, further comprising means for performing: initialising the parameters of said local feature extractor.

10. An apparatus as claimed in any one of the preceding claims, wherein the clustering algorithm used to generate one or more local centroids generates equally sized local clusters.

11. A server comprising means for performing:

    receiving trained local parameters of local neural network feature extractors from a plurality of user devices;

receiving a set of generated local centroids from the plurality of user devices, wherein the set of the local centroids describe clustering representations of local data at the respective user devices;

generating global feature extractor parameters by combining local feature extractor parameters from some or all of said user devices;

generating global centroids by clustering the received set of the generated local centroids using a clustering algorithm; and

providing the generated global feature extractor parameters and the generated global centroids to said plurality of user devices, for use in training respective local neural network feature extractors.

12. A server as claimed in claim 11, wherein said global feature extractor parameters are an average of the received local parameters.

13. A system comprising:

a plurality of user devices, wherein each user device comprises an apparatus as claimed in any one of claims 1 to 10; and

a server as claimed in claim 11 or claim 12.

14. A computer implemented method comprising:

obtaining local data comprising one or more samples at a user device;

computing representations of at least some of said samples by passing said one or more samples through a local feature extractor, wherein the local feature extractor is implemented by a neural network having trainable parameters;

clustering the computed representations, using a clustering algorithm, to generate one or more local centroids;

providing at least some of said generated local centroids and at least some of said parameters of the local feature extractor to a server;

receiving one or more global centroids from said server, wherein said one or more global centroids are generated by clustering multiple local centroids of one or more user devices;

receiving global feature extractor parameters from said server, wherein the global feature extractor parameters are generated by combining multiple local feature extractor parameters of said one or more user devices;

updating the parameters of the local feature extractor based on the received global feature extractor parameters;

assigning selected samples of one or more samples and one or more augmentations of said selected samples to global clusters; and

further updating the updated parameters of the local feature extractor such that a cross-entropy between cluster assignments of the selected samples and the augmentation of said selected samples is minimised, thereby generating a trained local feature extractor.

15. A computer program comprising instructions for causing an apparatus to perform at least the following:

obtaining local data comprising one or more samples at a user device;

computing representations of at least some of said samples by passing said one or more samples through a local feature extractor, wherein the local feature extractor is implemented by a neural network having trainable parameters;

clustering the computed representations, using a clustering algorithm, to generate one or more local centroids;

providing at least some of said generated local centroids and at least some of said parameters of the local feature extractor to a server;

receiving one or more global centroids from said server, wherein said one or more global centroids are generated by clustering multiple local centroids of one or more user devices;

receiving global feature extractor parameters from said server, wherein the global feature extractor parameters are generated by combining multiple local feature extractor parameters of said one or more user devices;

updating the parameters of the local feature extractor based on the received global feature extractor parameters;

assigning selected samples of one or more samples and one or more augmentations of said selected samples to global clusters; and

further updating the updated parameters of the local feature extractor such that a cross-entropy between cluster assignments of the selected samples and the augmentation of said selected samples is minimised, thereby generating a trained local feature extractor.

Samples → User device → Features

10

## Fig. 1

Device 25

Device

24

Server

22

Device

26

20

## Fig. 2

```
        ┌─────────────────────┐
        │    Initiate local   │
        │  Feature Extractor  │
   32 ─┘ └─────────────────────┘
                  │
                  ▼                    ◄──────┐
        ┌─────────────────────┐              │
        │   Combine Feature   │              │
        │     Extractors      │              │
   34 ─┘ └─────────────────────┘              │
                  │                           │
                  ▼                           │
        ┌─────────────────────┐              │
        │     Update local    │              │
        │  Feature Extractor  │              │
   36 ─┘ └─────────────────────┘              │
                  │                           │
                  ▼                           │
        ┌─────────────────────┐              │
        │ Train local Feature │              │
        │      Extractor      │──────────────┘
   38 ─┘ └─────────────────────┘
```

╲
30

*Fig. 3*

*Fig. 4*

```
                    ┌─────────────────────┐
                    │   Obtain local data │◀──────┐
                    └─────────────────────┘       │
            51  ╱            │                     │
                             ▼                     │
                    ┌─────────────────────┐        │
                    │   Extract features  │        │
                    └─────────────────────┘        │
            52  ╱            │                      │
                             ▼                      │
                    ┌─────────────────────┐         │
                    │   Perform local     │         │
                    │   clustering        │         │
                    └─────────────────────┘         │
            53  ╱            │                       │
                             ▼                       │
                    ┌─────────────────────┐          │
                    │   Provide local     │          │
                    │   information       │          │
                    └─────────────────────┘          │
            54  ╱            │                        │
                             ▼                        │
                    ┌─────────────────────┐           │
                    │   Receive global    │           │
                    │   information       │           │
                    └─────────────────────┘           │
            55  ╱            │                         │
                             ▼                         │
                    ┌─────────────────────┐            │
                    │   Update local      │            │
                    │   feature extractor │            │
                    └─────────────────────┘            │
            56  ╱            │                          │
                             ▼                          │
                    ┌─────────────────────┐             │
                    │   Train local feature│            │
                    │   extractor         │─────────────┘
                    └─────────────────────┘
            57  ╱                                    ↗
                                                    50
```

*Fig. 5*

*Fig. 6*

```
┌─────────────────────┐
│  Compute assignments │
│  to global clusters of│
│       sample         │
└─────────────────────┘
```
72

```
┌─────────────────────┐
│  Compute assignments │
│  to global clusters of│
│     augmentation(s)  │
└─────────────────────┘
```
74

```
┌─────────────────────┐
│  Update parameters to│
│  reduce cross-entropy│
└─────────────────────┘
```
76

70

## Fig. 7

Fig. 8

Fig. 9

Fig. 10

Fig. 11

Fig. 12

*FIG. 13*

*Fig. 14*

Europäisches
Patentamt

European
Patent Office

Office européen
des brevets

## EUROPEAN SEARCH REPORT

Application Number

EP 22 17 3100

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/083904 A1 (PASTORE VITO PAOLO [IT] ET AL) 17 March 2022 (2022-03-17) <br> * paragraph [0002] * <br> * paragraph [0052] - paragraph [0061] * <br> * paragraph [0031] * <br> * paragraph [0035] - paragraph [0036] * <br> * paragraph [0038] - paragraph [0041] * <br> * paragraph [0065] * | 1-15 | INV.<br>G06N3/04<br>G06N3/08 |
| A | FENGDA ZHANG ET AL: "Federated Unsupervised Representation Learning", ARXIV.ORG, CORNELL UNIVERSITY LIBRARY, 201 OLIN LIBRARY CORNELL UNIVERSITY ITHACA, NY 14853,<br>18 October 2020 (2020-10-18), XP081790026,<br>* page 2 - page 3; figure 2 * | 1-15 | |
| A | YILUN JIN ET AL: "A Survey towards Federated Semi-supervised Learning", ARXIV.ORG, CORNELL UNIVERSITY LIBRARY, 201 OLIN LIBRARY CORNELL UNIVERSITY ITHACA, NY 14853,<br>26 February 2020 (2020-02-26),<br>XP081608563,<br>* page 1, right-hand column, last paragraph - page 3, left-hand column, paragraph 3 * | 1-15 | |

TECHNICAL FIELDS
SEARCHED       (IPC)

G06N

The present search report has been drawn up for all claims

| Place of search | Date of completion of the search | Examiner |
|---|---|---|
| Munich | 28 October 2022 | Herri, Edmond |

EPO FORM 1503 03.82 (P04C01)

## ANNEX TO THE EUROPEAN SEARCH REPORT
## ON EUROPEAN PATENT APPLICATION NO.

EP 22 17 3100

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | Publication date | Patent family member(s) | Publication date |
|---|---|---|---|
| US 2022083904 A1 | 17-03-2022 | US 2022083904 A1 | 17-03-2022 |
|  |  | WO 2022057694 A1 | 24-03-2022 |

EPO FORM P0459

For more details about this annex : see Official Journal of the European Patent Office, No. 12/82